# EUROPEAN PATENT APPLICATION

(11) **EP 4 539 599 A1**
(43) Date of publication of application: **16.04.2025**
(21) Application number: 24203959.2
(22) Date of filing: 01.10.2024
(51) Int. Cl.: H05B 6/06, H05B 6/12

(54) **DEVICE FOR HEATING AND/OR COOLING A METAL OBJECT**

(30) Priority: 11.10.2023 IT 202300021180; 16.09.2024 IT 202400020578
(71) Applicant: Inova Lab S.r.l., 35131 Padova (IT)
(72) Inventor: Dughiero, Fabrizio, 35122 Padova (IT); Zerbetto, Marcello, 35128 Padova (IT); Zordan, Manuel, 36010 Cogollo del Cengio (VI) (IT); Sinigaglia, Nicholas, 36040 Grisignano di Zocco (VI) (IT); Lazzarin, Matteo, 35128 Padova (IT)
(74) Representative: Ponchiroli, Simone

(57) **Abstract**

Device (1) for heating a metal object, such as a vessel (2) having a metal portion, which comprises: a resting portion for supporting the metal object; heating means (5); a measuring sensor (8) for estimating a temperature of the metal object, comprising at least one measuring coil (9) and an electronic device (10). The measuring coil (9) is part of an electrical circuit. The electronic device (10) is connected to the electrical circuit to supply it with an alternating voltage at a predefined frequency that is between 100 kHz and 500 kHz and to measure a resistance of the electrical circuit supplied in this way.

## Description

This invention relates to a device for heating and/or cooling a metal object. This invention relates in particular to devices for heating and/or cooling vessels that have at least one portion made of metal material.

This invention was initially developed with reference to induction cooktops for heating a vessel, with the vessel having a bottom portion made of ferromagnetic material which can be heated by electromagnetic induction. Therefore, hereinafter reference will mainly be made to the application in which the device is an induction cooktop. However, this invention may similarly be applied in any device configured to heat and/or to cool a vessel which has at least one metal portion, as well as any other metal object, irrespective of whether or not the metal object or the vessel are an integral part of the device. It is advantageously applied if the metal portion is made of ferromagnetic material.

Induction cooktops are increasingly widespread on the market since they have many advantages over classic cooktops based on heating by means of combustion. In fact, induction cooktops do not need flames, do not emit products of combustion into the environment in which they are used and have no risks linked to gas leaks. Moreover, in general they are more efficient and allow faster, more even cooking results.

As is known, induction cooktops comprise a resting plane, which is usually made of glass-ceramic material, and a heating coil. The heating coil is placed below the resting plane and is connected to an electric power supply. The power supply supplies the heating coil with an alternating voltage having a frequency that is usually between 20 kHz and 70 kHz, in such a way that the heating coil generates a variable electromagnetic field. That electromagnetic field generates induced currents in the ferromagnetic bottom portion of the vessel which produce heat due to the Joule effect, thereby heating the vessel and the foods contained in it.

The considerable spread of induction cooktops has brought new needs, for example, the need to precisely determine the temperature of the vessel which is positioned on the resting plane of the cooktop.

In fact, knowledge of the temperature of the vessel and, therefore, roughly that of the foods contained in the vessel, allows optimisation of cooking of the foods (consider foods which have to be cooked at a predetermined temperature), and protection of the vessel itself (whether it is a pot, a frying pan or another type of vessel) avoiding damage to it due to excessive temperatures, during cooking of the foods, as well as allowing the best possible management of energy consumption.

The same need to know the temperature of the vessel and, therefore, roughly that of the foods contained in it, also exists in other devices intended for heating or cooling a vessel, in particular for preparing foods.

Similarly the need to know the temperature also exists when heating and/or cooling other metal objects.

The problem of determining the temperature of the vessel and, therefore, of the foods contained in it has already been dealt with, and in the prior art it is possible to find even induction cooktops which measure the temperature of the vessel.

In some of these induction cooktops, the temperature of the vessel is measured using the heating coil. For example, an induction cooktop of this type is described in European patent application EP 1378807. In this patent application, the heating coil is designed not just to heat the bottom portion of the vessel, but also as a temperature sensor to determine the temperature of the bottom portion of the vessel. For that purpose, it is also the case that the voltage supplied to the heating coil to heat the vessel is interrupted during detection of the temperature and, therefore, that the heating coil is controlled in a timed way.

Induction cooktops of this type have considerable disadvantages. First of all, they have complex designs: in fact, during the design process the dual function of the heating coil must be taken into account.

In other induction cooktops, measurement of the temperature of the vessel is instead carried out using a measuring coil which is different to the heating coil. In this way, the heating can take place in a uniform way and without discontinuity. As described in international patent application WO 200803872, the induction cooktop comprises a sensor for measuring the temperature of the vessel which has a circuit comprising the measuring coil. The measuring coil is positioned at the centre of the heating coil and is supplied with a square wave with frequency corresponding to the resonant frequency of the circuit. However, in these induction cooktops measurement of the temperature is not precise.

In this context the technical purpose which forms the basis of this invention is to make a device for heating and/or cooling a metal object, and in particular for heating and/or cooling a vessel, which at least partially overcomes the above-mentioned disadvantages.

In particular the technical purpose of this invention is to make a device for heating and/or cooling a metal object, and in particular for heating and/or cooling a vessel, which allows the temperature of the metal object to be measured more precisely than in the prior art.

Moreover, the technical purpose of this invention is to make an induction cooktop that at least partially overcomes the above-mentioned disadvantages, by advantageously allowing measurement of the temperature of the vessel placed on it more precisely than in the prior art.

The technical purpose and the aims indicated are substantially achieved by a device for heating and/or cooling a metal object, and in particular for heating and/or cooling a vessel (that has at least one portion made of metal material), in accordance with what is defined in independent claim 1. Particular embodiments of this invention are defined in the corresponding dependent claims.

Further features and the advantages of this invention will be more apparent from the detailed description of several preferred, non-limiting embodiments of a device for heating and/or cooling a metal object, illustrated with reference to the accompanying drawings in which the device is composed of an induction cooktop and the metal object is a vessel that has at least one portion made of metal material, wherein:
- Figure 1 is a schematic side view with some parts cut away to better illustrate others, of a first embodiment of an induction cooktop in accordance with this invention, on which a vessel is present;
- Figure 2 is a schematic top view of several elements of the first embodiment of the induction cooktop of Figure 1, without the vessel;
- Figure 3 is a schematic side view with some parts cut away to better illustrate others, of a second embodiment of an induction cooktop in accordance with this invention, on which a vessel is present;
- Figure 4 is a schematic top view of several elements of the second embodiment of the induction cooktop of Figure 3, without the vessel; and

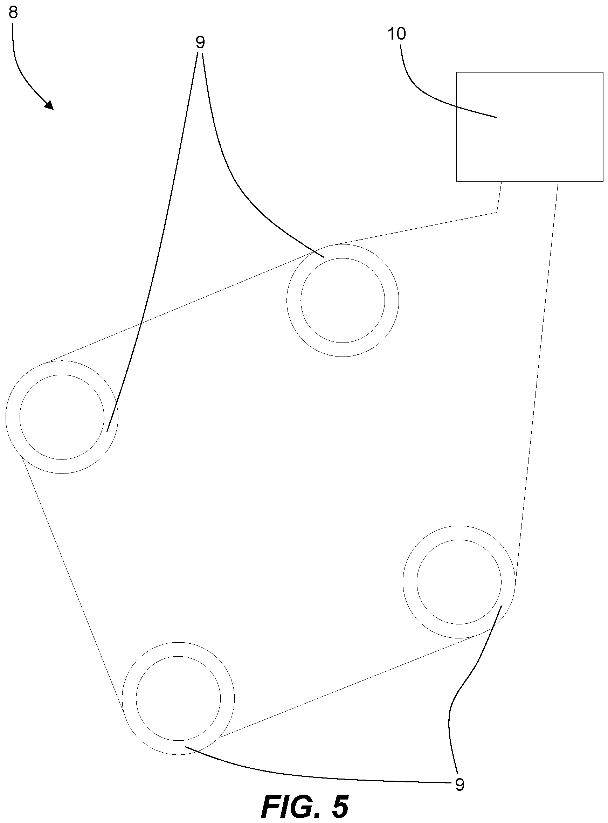

- Figure 5 is a schematic top view of a plurality of measuring coils connected to each other in series.

What is described below with reference to a metal object composed of a vessel that has a metal portion, shall also be understood to apply, with the appropriate adjustments if necessary, for any other metal object that the device is intended to heat and/or to cool.

For the purposes of this invention, the term "vessel" means any container which is advantageously suitable for receiving the substance to be heated (for example a food substance) such as, for example, a pot or a frying pan. As already said, this invention applies where the vessel has at least one portion made of metal material (hereinafter referred to more simply as "metal portion"). Preferably the metal portion is a bottom portion of the vessel. Moreover, advantageously, in some embodiments the metal portion is composed of ferromagnetic material.

In general, the device according to this invention comprises a resting portion which is configured to support in use the vessel 2 and temperature variation means, configured to act on the vessel 2 placed on the resting portion in order to vary its temperature (and consequently to vary the temperature of what is contained in it). Depending on the embodiments, the temperature variations means may be of any type and may be configured either only for heating the vessel 2, or only for cooling the vessel 2, or both for heating and for cooling the vessel 2 (depending on the requirements for use). In some preferred embodiments, the temperature variation means are induction heating means. Temperature variation means of all of these types are known to people expert in the sector and therefore will not be described in detail herein.

With reference to the above-mentioned figures the reference number 1 denotes in its entirety a device according to this invention composed of an induction cooktop (device in which the temperature variation means are therefore only configured to heat the vessel 2).

While in the case of a device composed of an induction cooktop the vessel 2 is not usually part of the device itself, in other embodiments in contrast the vessel 2 is part of the device; it may also be the case that the device according to this invention comprises a plurality of vessels 2 which are interchangeable and positionable on the resting portion.

The induction cooktop 1, as well as any other device which comprises induction heating means, is configured to heat a vessel 2 that has a bottom portion 3 (the metal portion) made of ferromagnetic material and which can therefore be heated by electromagnetic induction.

Similarly to prior art induction cooktops, the induction cooktop 1 according to this invention comprises first of all a resting plane 4 which forms the resting portion of the device, which is configured to support the vessel 2 and which is advantageously made with a glass-ceramic material.

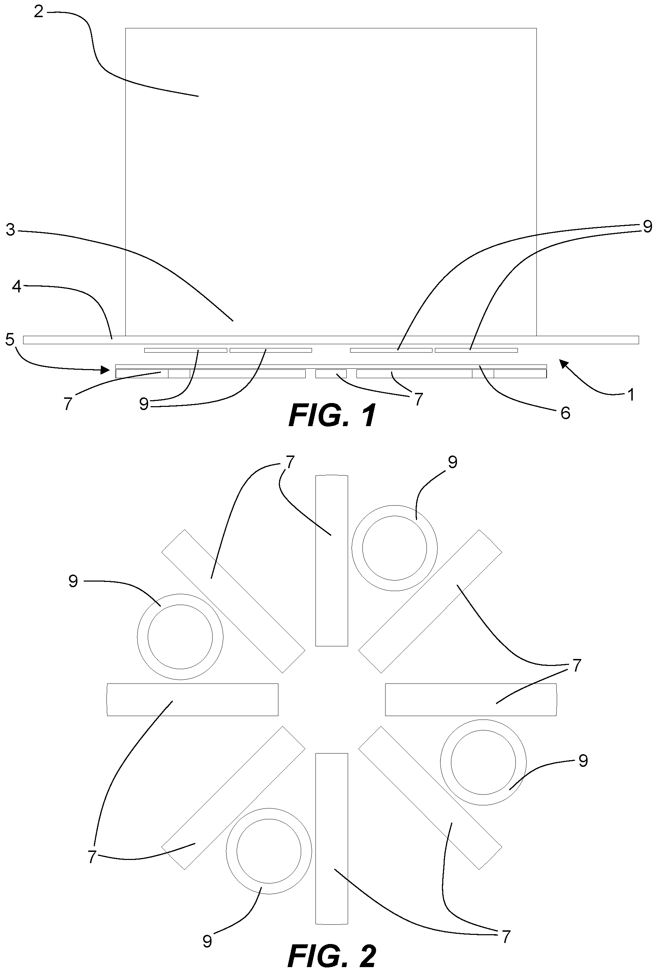

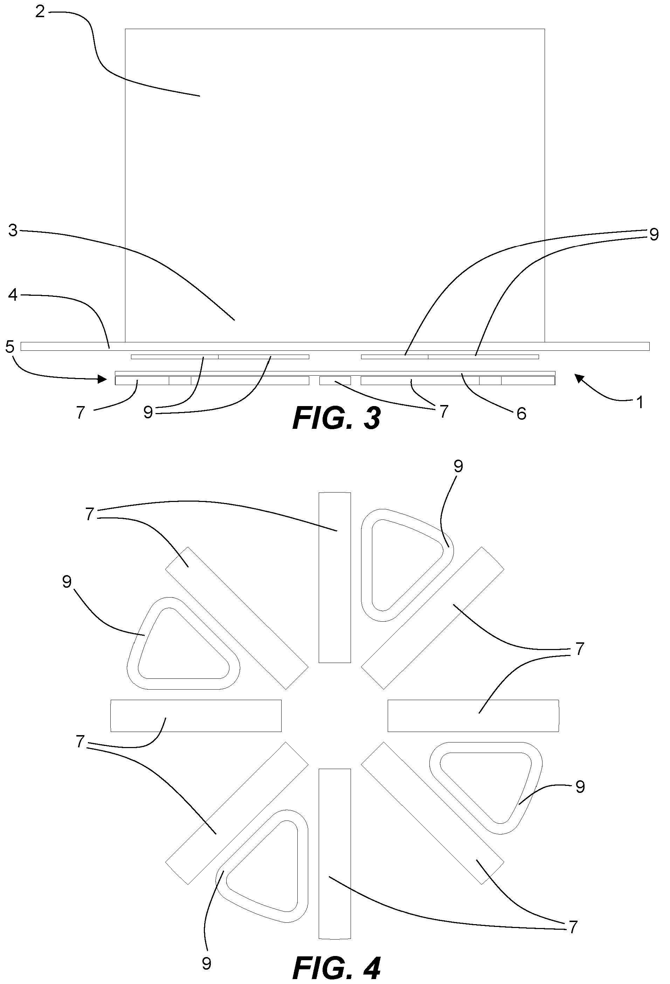

The induction cooktop 1 also comprises heating means 5 which form the temperature variation means and which comprise a heating coil 6 (which is visible in Figures 1 and 3) which is positioned below the resting plane 4 and which is operationally connectable to, and powerable by, an electric power supply. The heating coil 6 is configured to generate an electromagnetic field at the bottom portion 3 of the vessel 2 positioned on the resting plane 4. As is usually the case for induction cooktops, the electric power supply is usually composed of the building mains network and the induction cooktop 1 also comprises an inverter connectable at its input to the mains and at its output to the heating coil 6. The inverter converts the input voltage (for example at 230V and 50Hz) into the alternating voltage necessary to generate an electromagnetic field variable over time above the resting plane 4 (with frequency advantageously between 20 kHz and 70 kHz). However, it should be emphasised that the ways in which heating coil 6 operates and the ways in which heating by electromagnetic induction occurs will not be described in further detail hereinafter, since they are known to a person expert in the sector.

In the known way the induction cooktop 1 may comprise a plurality of coaxial heating coils 6 which can be activated independently and/or simultaneously, or a plurality of independent heating coils 6 which are placed in different positions relative to the resting plane 4, to allow simultaneous heating of a plurality of vessels 2; in the latter case, what is described below for a single heating coil 6 can also be considered to apply for each of them. Similar solutions may also be adopted for any other device which comprises induction heating means for heating the vessel 2 placed on the resting portion.

Advantageously, the heating means 5 also comprise a plurality of ferrites 7 which are positioned below the heating coil 6 and which, in the known way, are configured to concentrate the electromagnetic field at the bottom portion 3 (or more generally at the metal portion) of the vessel 2. However, this invention is not limited by the number or positioning of the ferrites 7. In the embodiments illustrated, for example, the heating means 5 comprise eight ferrites 7 which extend radially relative to a central axis of the heating coil 6 and which are positioned in such a way as to be equidistant from each other (in particular, in the two embodiments shown, each ferrite 7 is angularly spaced at 45° from the adjacent ferrites 7). In contrast, in other embodiments, there may be a different number of ferrites 7 and/or they may be positioned differently.

In accordance with an innovative aspect of this invention, the device also comprises a measuring sensor 8 for estimating, in use, the temperature of the metal portion of the vessel 2 placed on the resting portion 4. The measuring sensor 8 comprises at least one measuring coil 9, which is distinct and independent from the temperature variation means, and an electronic device 10.

In cases in which the device is an induction cooktop 1, the measuring sensor 8 is usable for estimating the temperature of the bottom portion 3 of the vessel 2 placed on the resting plane 4 above the heating coil 6.

The at least one measuring coil 9 is part of an electrical circuit. Moreover, the at least one measuring coil 9 comprises a plurality of turns. The measuring coil 9 is positioned in such a way as to magnetically couple to the metal portion of the vessel 2 placed on the resting portion.

If the device is composed of the induction cooktop 1, in order for the measuring coil 9 to be distinct and independent from the temperature variation means, the measuring coil 9 is distinct from the heating coil 6; moreover in order for the measuring coil 9 to magnetically couple to the metal portion of the vessel 2, in the case of the induction cooktop 1, the measuring coil 9 is interposed between the heating coil 6 and the resting plane 4

The electronic device 10 is operationally connected to the at least one measuring coil 9. In particular, in accordance with the main innovative aspect of this invention, the electronic device 10 is connected to the electrical circuit of which the at least one measuring coil 9 is a part, to supply it with an alternating voltage at a predefined frequency that is between 100 kHz and 500 kHz and to measure a resistance and/or an inductance of the electrical circuit during that supplying (that is to say, the apparent resistance and/or inductance of the electrical circuit at the predefined frequency of that alternating voltage). In accordance with this invention, the predefined frequency of the supply alternating voltage, as well as that of the resistance and/or of the inductance measurement, is fixed and predefined, and does not depend on the temperature of the vessel 2. In particular, the predefined frequency is different to the resonant frequency of the electrical circuit.

In fact, in accordance with this invention, the resistance and/or inductance value measured at the ends of the electrical circuit of which the at least one measuring coil 9 is a part is used/usable for estimating the temperature of the vessel 2 positioned on the resting portion (more specifically of its metal portion). In fact, as is known, the resistance (R) and the inductance (L) measurable at the ends of a powered coil in which an alternating current circulates, depend on various factors, including the presence nearby of metal or ferromagnetic material which can interact with the magnetic field generated by the coil itself and in which induced currents may therefore be created. That applies for the at least one measuring coil 9 provided by this invention which, during normal use of the device, magnetically couples at least to the metal portion of the vessel 2 and causes induced currents to circulate in it. For example, the resistance measurable at the ends of the electrical circuit is therefore determined not just by the (few) Joule-effect losses in the material of which the at least one measuring coil 9 is composed, but also (and above all, in the case of a ferromagnetic metal portion) by the Joule-effect losses generated in the vessel 2 as a result of circulation of the induced currents.

It is also known that, as the temperature increases, the resistivity of a metal or ferromagnetic material increases, so that an increase (or a reduction) in the temperature of the vessel 2 causes an increase (or a reduction) in the resistance measurable at the ends of the electrical circuit. The inductance measurable at the ends of the electrical circuit also varies with variations in the temperature.

Electrically, with particular reference to the case in which the measuring sensor 8 comprises a plurality of measuring coils 9, each measuring coil 9 can be characterised as having a respective resistance R_{b} and a respective inductance L_{b} and, therefore, a respective impedance Z_{b}=R_{b}+*ⱼ*X_{b} with the reactance X_{b} a function of L_{b}. (X_{b} = ωL_{b} where ω indicates the angular frequency of the electrical circuit). Considering as a whole the electrical circuit connected to the electronic device 10, it is characterised by an equivalent impedance Z_{eq}=R_{eq}+*ⱼ*X_{eq} whose value depends on the respective values of R_{b} (for the real part) and of L_{b} (linked to the imaginary part), and therefore of Z_{b}, of the different measuring coils 9 which are part of it (as well as the way in which they are connected). However, as said, the equivalent resistance of the electrical circuit R_{eq}, which is the resistance measured Rₘᵢₛ by the electronic device 10, depends on the resistance of the vessel 2 R_{rec} coupled to the measuring coils 9, which depends on the temperature of the vessel 2 T_{rec}. When the no-load behaviour of the electrical circuit at the different temperatures is known, it is possible to determine the resistance of the vessel 2 R_{rec} coupled to the measuring coils 9 at any time. In turn, knowledge of the resistance R_{rec} may allow an estimate of the temperature of the vessel 2 T_{rec} (in particular, of the bottom portion 3 of the vessel 2). Similarly, the equivalent inductance of the electrical circuit L_{eq}, and the equivalent impedance of the electrical circuit Z_{eq}, which may correspond, respectively, to the inductance measured Lₘᵢₛ and to the impedance measured Zₘᵢₛ by the electronic device 10, depend, respectively, on the inductance of the vessel 2 L_{rec} and on the impedance of the vessel 2 Z_{rec} coupled to the measuring coils 9, which depend on the temperature of the vessel 2 T_{rec}. When the no-load behaviour of the electrical circuit at the different temperatures is known, it is possible to determine, respectively, the inductance of the vessel 2 L_{rec} or the impedance of the vessel 2 Z_{rec} coupled to the measuring coils 9 at any time. In turn, knowledge, respectively, of the inductance of the vessel 2 L_{rec} or of the impedance of the vessel 2 Z_{rec} may allow an estimate of the temperature of the vessel 2 T_{rec} (in particular, of the metal portion of the vessel 2 to which the measuring coil 9 is coupled). The ways in which this can be done are known to a person expert in the sector and therefore will not be described in further detail. However, by way of example only, it should be noticed that a method for measuring the impedance of an electrical circuit at a frequency of interest, usable in the context of this invention with the appropriate adjustments, is described in the article by George R. Steber, "An LMS Impedance Bridge"; WB9LVI; QEX, September/ October 2005, p 41-47. Advantageously, the electronic device 10 is connectable to an electronic processing unit which is configured to receive the data on the measured resistance and/or inductance of the electrical circuit and to process such data in such a way as to estimate the temperature of the metal portion of the vessel 2. For this reason, hereinafter, when referring to "temperature measurement" we mean the temperature measurement which is estimated from the measurement of the resistance and/or of the inductance described above. The electronic processing unit may itself be part of the device or be independent of it; moreover, the electronic device 10 and the electronic processing unit may be composed of a single device.

Similarly to the situation in other prior art devices, the temperature estimated using the measuring sensor 8 may then be used by the device itself to automatically adjust operation of the temperature variation means, for example based on a program preset by the user (based on the estimated temperature value the device will be able to automatically adjust operation of the temperature variation means to increase, hold steady or reduce the temperature).

In some embodiments, not shown in the accompanying figures, the at least one measuring coil 9 is composed of a single measuring coil 9. Preferably, in the embodiments in which the at least one measuring coil 9 is composed of a single measuring coil 9, in a plan view each turn of the measuring coil 9 has a circular shape with a diameter which is preferably between 40 mm and 120 mm, advantageously between 50 mm and 90 mm.

According to a secondary innovative aspect of this invention, in contrast, preferably the at least one measuring coil 9 comprises a plurality of measuring coils 9 which are electrically connected to each other, advantageously in series and/or in parallel. Those embodiments will be described in more detail below.

In some embodiments the measuring coil 9 or the measuring coils 9 are off-centre relative to the temperature variation means.

In contrast, in some embodiments, the measuring coils 9 are distributed about a central axis, that of the heating coil 6 in the case of an induction cooktop 1. Moreover, in the preferred embodiments, the measuring coils 9 are placed at vertices of a polygon, preferably a regular polygon centred on the central axis. For example, in the embodiments shown in Figures 2 and 4, the measuring coils 9 are composed of four measuring coils 9 which are placed at the vertices of a square. The embodiments in which the measuring coils 9 are distributed about a central axis advantageously allow a very precise temperature measurement to be obtained.

In the embodiments in which heating means 5 comprise the ferrites 7, each measuring coil 9 may be positioned, in a plan view, in such a way as to be offset relative to the ferrites 7 (that is to say, in such a way that they do not overlap with any ferrites 7). For example, as is clearly visible in Figures 2 and 4, in which the heating means 5 comprise eight ferrites 7 and the measuring sensor 8 comprises four measuring coils 9, each measuring coil 9 may be positioned between a pair of adjacent ferrites 7.

It should be emphasised that in both of the embodiments shown in the figures, there are four measuring coils 9. However, other embodiments, not shown, are possible, in which the number of measuring coils 9 is different to four and/or in which the measuring coils 9 are positioned differently (whether the heating means 5 comprise the ferrites 7, or the heating means 5 do not comprise the ferrites 7, or the temperature variation means take on a different form). For example, in some embodiments there are eight measuring coils 9 positioned at the vertices of an octagon (in this case too, if the heating means 5 comprise the ferrites 7, the measuring coils 9 are advantageously positioned, in a plan view, between two adjacent ferrites 7). Advantageously, each measuring coil 9 comprises a plurality of turns. Preferably, each measuring coil 9 comprises a number of turns that is equal or different to the number of turns of each other measuring coil 9 and that is advantageously between 5 and 50 turns (advantageously, even in the embodiments in which a single measuring coil 9 is present it comprises a number of turns that is between 5 and 50). For example, in some embodiments the measuring coils 9 all have the same number of turns. In contrast, in other embodiments, the measuring coils 9 all have a different number of turns. In contrast, in yet other embodiments, some of the measuring coils 9 have a same number of turns that is different to the number of turns of one or more of the other measuring coils 9. In fact, this invention is not limited by the number of turns of the measuring coils 9.

Moreover, the turns of the different measuring coils 9 may have shapes which are the same as or different to each other. For example, in some embodiments, in a plan view, the turns of the measuring coils 9 have a circular shape (as shown in Figure 2). In other embodiments, the turns of the measuring coils 9, in a plan view, have a plectrum shape (as shown in Figure 4). In contrast, in yet other embodiments, the turns of the measuring coils 9, in a plan view, have an ellipse shape or a boomerang shape (not shown in the figures). Embodiments are also possible in which the turns of the different measuring coils 9, in a plan view, have shapes that are different to each other (for example, some measuring coils 9 have cross-sections that are circular and other measuring coils 9 have cross-sections that are plectrum-shaped) or different to those described.

As can be seen in the accompanying figures, a plectrum shape allows the measuring coil 9 to better adapt to the presence of the ferrites 7 compared with a shape different to that of a plectrum such as, for example, the circular shape.

Moreover, even the direction of winding of the measuring coils 9 is not limiting for this invention. As is known, the expression "direction of winding" means the way the coil is wound relative to an axis of extension of the measuring coil 9. In particular, in some embodiments the measuring coils 9 are wound in the same direction and in other embodiments, in contrast, amongst the measuring coils 9 it is possible to identify one or more first measuring coils 9, which are wound in a first direction, and one or more second measuring coils 9, which are wound in a second direction counter to the first direction. As is known, in the case of measuring coils 9 which are wound in opposite directions to each other, the electromagnetic field generated by one of the first measuring coils 9 and the electromagnetic field generated by one of the second measuring coils 9, if electric current flows through both measuring coils 9 in the same direction, are opposite to each other.

The turns of each of the first measuring coils 9 each enclose, in a plan view, a respective first area and the turns of each of the second measuring coils 9 each enclose, in a plan view, a second respective area. In some cases, each first area and each second area have different amplitudes to each other. For example, it is possible either that all of the first areas have an amplitude equal to each other, that all of the second areas have an amplitude equal to each other and that the amplitude of the first areas is different to the amplitude of the second areas or that at least one first area has an amplitude different to another first area and/or that at least one second area has an amplitude different to another second area. It should be emphasised that those described are only examples of the possible embodiments of this invention and that, therefore, they shall not be considered limiting for this invention.

Moreover, with reference to the embodiments in which the first direction of winding of the first measuring coils 9 is opposite to the second direction of winding of the second measuring coils 9, advantageously the sum of all of the first areas differs from the sum of the second areas by no more than 20%, and preferably no more than 10%.

Advantageously, embodiments of this type allow a big reduction in the effect of the voltage induced in the measuring coils 9 by the electromagnetic field generated by the heating coil 6 and allow measurement of the resistance and/or of the inductance to be rendered not very sensitive to small imperfections in the bottom portion 3 of the vessel 2 (surface not perfectly flat, lack of uniformity in the material, presence of small recesses, etc.).

In some embodiments in which the device comprises induction heating means (not shown in the figures), in a plan view, each measuring coil 9 is overlapping with the heating coil 6. In fact, a configuration of this type advantageously allows a reduction in the influence that the heating coil 6 has over the measurement since, as is known, the electromagnetic field in the immediate vicinity of the conductor is very low (at least compared to the central zone of the heating coil 6).

Finally, the Applicant reserves the right to independently protect, even by filing divisional patent applications, even only a measuring sensor 8 for estimating, in use, a temperature of any metal object (and in particular of a metal portion of a vessel 2), where the measuring sensor 8 comprises at least one measuring coil 9 and an electronic device 10, and wherein:
the at least one measuring coil 9 is part of an electrical circuit and comprises a plurality of turns; and
the electronic device 10 is connected to the electrical circuit to supply it, in use, with an alternating voltage at a predefined frequency that is between 100 kHz and 500 kHz and to measure, in use, a resistance and/or an inductance of said electrical circuit supplied with said predefined frequency of between 100 kHz and 500 kHz.

Optionally, that measuring sensor 8 may also comprise one or more of the features described above with regard to the measuring sensor 8 which is part of the device according to this invention.

This invention brings important advantages.

Thanks to this invention it was possible to make a device for heating and/or cooling a metal object which allows more precise measurement of the temperature of the metal object than in the prior art.

In particular, thanks to this invention it was possible to make an induction cooktop which allows more precise measurement of the temperature of the vessel than the prior art induction cooktops.

In more detail, in the case of induction cooktops, the presence of a plurality of measuring coils allows a more precise measurement of the temperature of the metal object compared to the prior art in which only a single measuring coil is present positioned at the centre of the heating coil. In fact, tests run by the Applicant showed that the solution in which a single measuring coil is present only allows a localised measurement (which is therefore very sensitive to variations in the material of the bottom portion of the vessel and to its shape): for example a bottom portion of the vessel which is not completely flat or which has recesses, even just 2 mm deep, causes a change in the measurement and the resulting error is far too high.

A similar advantage also applies in the case of devices intended to heat and/or to cool other types of metal objects.

Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. Device for heating and/or cooling a metal object, such as a vessel (2) that has a metal portion (3) made of metal material, the device (1) comprising:
a resting portion (4), which is configured to support, in use, said metal object;
temperature variation means configured to act on the metal object placed on the resting portion (4);
a measuring sensor (8) for estimating, in use, a temperature of said metal portion of the metal object, the measuring sensor (8) comprising at least one measuring coil (9) and an electronic device (10);
wherein:
the at least one measuring coil (9) is part of an electrical circuit and comprises a plurality of turns; and
the electronic device (10) is connected to the electrical circuit to supply it, in use, with an alternating voltage at a predefined frequency that is between 100 kHz and 500 kHz and to measure, in use, a resistance and/or an inductance of said electrical circuit supplied with said predefined frequency of between 100 kHz and 500 kHz.

2. Device according to claim 1, wherein the at least one measuring coil (9) is composed of a single measuring coil (9).

3. Device according to claim 1, wherein the at least one measuring coil (9) comprises a plurality of measuring coils (9) that are electrically connected to each other.

4. Device according to claim 3, wherein said measuring coils (9) are distributed about a central axis of the heating coil (6).

5. Device according to claim 4, wherein the measuring coils (9) are placed at vertices of a polygon, preferably a regular polygon centred on said central axis.

6. Device according to claim 5, wherein said plurality of measuring coils (9) is composed of four measuring coils (9) that are placed at the vertices of a square.

7. Device according to any one of claims 3 to 6, wherein each measuring coil (9) comprises one or more turns and wherein, in a plan view, each turn of the measuring coil (9) has a circular shape with a diameter of between 40 mm and 120 mm, preferably between 50 mm and 90 mm.

8. Device according to any one of claims 3 to 7, wherein each measuring coil (9) of said plurality of measuring coils (9) comprises a number of turns that is equal or different to the number of turns of another measuring coil (9) of said plurality of measuring coils (9), said number of turns being between 5 and 50.

9. Device according to any one of claims 3 to 8, wherein, all measuring coils (9) of the plurality of measuring coils (9) are wound in the same direction.

10. Device according to any one of claims 3 to 8, wherein, within the plurality of measuring coils (9), one or more first measuring coils (9) wound in a first direction and one or more second measuring coils (9) wound in a second direction counter to the first direction can be identified.

11. Device according to claim 10, wherein the turns of each first measuring coil (9) each enclose, in a plan view, a respective first area and the turns of each second measuring coil (9) each enclose, in a plan view, a second respective area, and wherein each first area and each second area have equal or different amplitudes to each other.

12. Device according to claim 10 or 11, wherein the sum of all first areas differs from the sum of all second areas by no more than 20%, preferably no more than 10%.

13. Device according to any one of claims 3 to 12, wherein, in a plan view, each turn of each measuring coil (9) of said plurality of measuring coils (9) has a circular shape, a plectrum shape, an ellipse shape or a boomerang shape.

14. Device according to any one of claims 3 to 13, wherein, the measuring coils (9) are electrically connected to each other in parallel and/or in series.

15. Device according to any one of claims 1 to 14, wherein the electronic device (10) is connectable to an electronic processing unit that is configured to receive data on the resistance and/or the inductance of the electrical circuit measured by the electronic device (10) and to process such data to estimate the temperature of the metal object.

16. Device according to any one of claims 1 to 15, wherein the electronic device (10) is configured to power the electrical circuit, in use, with a predefined frequency that differs from a resonant frequency of the electrical circuit.

17. Device according to any one of claims 1 to 16, wherein:
the device is an induction cooktop for heating a vessel (2) that comprises a metal portion made of ferromagnetic material;
said resting portion is a resting plane (4);
said temperature variation means are heating means (5) which comprise a heating coil (6) that is placed below the resting plane (4) and that is operationally connectable to, and powerable by, an electric power supply to generate an electromagnetic field;
the at least one measuring coil (9) is distinct from the heating coil (6) and is interposed between the heating coil (6) and the resting plane (4).

18. Device according to claim 17 when it depends on claim 3, wherein said heating means (5) also comprise a plurality of ferrites (7) that are positioned below the heating coil (6) and wherein, in a plan view, each measuring coil (9) of said plurality of measuring coils (9) is positioned offset relative to the ferrites (7), preferably between two adjacent ferrites (7).

19. Device according to claim 17 or 18 when they depend on claim 3, wherein, in a plan view, each measuring coil (9) of said plurality of measuring coils (9) is overlapping with the heating coil (6).

20. Device according to any one of claims 1 to 16, wherein the device also comprises the metal object.

21. Device according to any one of claims 1 to 20 wherein the metal object is a vessel (2) that comprises a metal portion and wherein said metal portion of the vessel (2) is a bottom portion (3) and/or is made of ferromagnetic material.

22. Device according to any one of claims 1 to 21, wherein the electronic device (10) is connected to the electrical circuit to measure, in use, only the resistance of said electrical circuit.
